# DEMANDE DE BREVET EUROPEEN

(11) **EP 1 775 056 A1**
(43) Date de publication de la demande: **18.04.2007**
(21) Numéro de dépôt: 06301034.2
(22) Date de dépôt: 11.10.2006
(51) Int. Cl.: B23K 9/095, B23K 9/32, B23K 9/013

(54) **Générateur de courant de travail à l'arc à mémoire de stockage de masse de données avec une entrée du type USB; Système de travail à l'arc ayant un tel générateur; Procédé de transfert de données vers un tel générateur**

(30) Priorité: 14.10.2005 FR 0553126
(71) Demandeur: AIR LIQUIDE WELDING FRANCE, 75007 Paris (FR)
(72) Inventeur: Reymond, Christian, 95160 Montmorency (FR); Chevreteau, Vincent, 94130 Nogent s/Marne (FR)
(74) Mandataire: Pittis, Olivier

(57) **Abrégé**

L'invention porte sur un générateur (1) de courant de travail à l'arc électrique, en particulier de soudage, comprenant des moyens d'entrée d'informations permettant de fournir des informations au générateur, une interface (2) de communication pour permettre une récupération, un traitement, un échange et/ou un transfert desdits informations à des moyens à mémoire de masse, et des moyens à mémoire de masse pour stocker les informations provenant de et/ou échangées avec l'interface de communication. Selon l'invention, les moyens d'entrée d'informations comprenant une entrée (5) de type port USB à laquelle vient se raccorder une clé de type USB pour permettre un transfert ou un échanges d'informations ou de données diverses, depuis ladite clé USB vers le poste, ou inversement.

## Description

L'invention concerne un générateur de courant de travail à l'arc électrique, en particulier une source de courant de soudage à l'arc, comprenant un système simple pour transférer efficacement des informations audit générateur, ou dans l'autre sens, sans nécessiter l'utilisation d'un ordinateur ou analogue.

Actuellement, les générateurs ou postes de courant pour soudage à l'arc électrique ou analogue comportent tous des cartes électroniques à mémoire(s) de stockage de données où sont emmagasinées les différentes données servant à la bonne réalisation du ou des procédés de soudage ou analogues mettant en oeuvre ce poste.

Les données à stocker sont habituellement transférées à cette (ou ces) mémoire(s) de stockage par l'intermédiaire d'une interface de communication permettant non seulement de récupérer les données à stocker mais aussi de les traiter avant de les transmettre à la mémoire de stockage.

Les données pouvant être ainsi stockées sont de tout type, en particulier il peut s'agir de fichiers informatiques divers, d'instructions à exécuter, de données de configuration, de mises à jour, de tables de références, d'historiques de défauts, de stockage de masse de données en cours de soudage (courant et tension), d'historiques des interventions...

L'interface de communication récupère, quant à elle, les flux de données d'une source externe au poste de soudage qui est classiquement un ordinateur, tel un ordinateur portable, que l'on connecte, directement ou indirectement, à l'interface de communication du poste de soudage.

Toutefois, cette solution a un inconvénient majeur, à savoir qu'elle oblige à utiliser un ordinateur pour le transfert de données, ce qui augmente les coûts et n'est pas toujours pratique, en particulier sur les chantiers ou dans tout autre environnement de travail difficile.

Dans certains cas, les données sont transmises à distance au poste, soit par liaison filaire, tel un réseau de transmission de données, notamment un réseau intranet local ou le réseau mondial internet, soit par transmission sans fil, par exemple par ondes hertziennes.

Cependant, ces solutions ont également limites notamment du fait que, dans le premier cas, la plupart des sites de soudage ne sont pas équipés de réseaux de communication facilement accessibles et, dans le second cas, les transmissions à distance de données ne sont pas idéales car elles peuvent être perturbées par des interférences conduisant à des problèmes de fiabilité des informations transmises et surtout nécessite l'utilisation de composants émetteurs/récepteurs qui complexifie l'installation et augmentent son coût.

En outre, certaines données peuvent ou doivent être stockées directement dans le générateur et donc saisies à partir d'un ordinateur. Ceci améliore le confort d'utilisation mais oblige à un raccordement de l'ordinateur au générateur, soit en utilisant les moyens de liaison susmentionnés, soit oblige à utiliser un ordinateur portable devant être acheminé sur site, ce qui n'est pas très pratique et/ou difficile, et oblige surtout à disposer d'un tel ordinateur, ce qui engendre un surcoût non négligeable pour l'utilisateur.

Il existe enfin des postes comprenant une ou des mémoires de type PCMCIA ou analogues qui requièrent de disposer d'un lecteur dédié et spécifique de ce type de mémoire. On comprend là aussi que ce type de système n'est pas du tout idéal et engendre un surcoût important de fabrication du poste de soudage.

Le problème qui se pose alors est de proposer un poste de soudage amélioré qui comprenne une mémoire de stockage de coût acceptable vers laquelle un transfert d'informations et de données diverses puisse être effectué facilement, en grande quantité, c'est-à-dire allant jusqu'à plusieurs MégaOctets et à bas coût, y compris lorsque le poste de soudage se trouve dans un environnement de travail difficile, lequel transfert ne nécessite pas la connexion du poste à un ordinateur portable ou fixe, ni à un réseau de communication, ni un transfert à distance des données.

De plus, le poste de l'invention doit pouvoir effectuer, si besoin, un transfert unidirectionnel de données, c'est-à-dire unilatéralement de la source de données vers le poste ou inversement, ou bidirectionnel de données, c'est-à-dire de à la fois la source de données vers le poste et du poste vers la source.

La solution de l'invention est alors un générateur de courant de travail à l'arc électrique comprenant :
- des moyens d'entrée d'informations permettant de fournir des informations au générateur,
- une interface de communication pour permettre une récupération, un traitement, un échange et/ou un transfert desdits informations à des moyens à mémoire de masse, et
- des moyens à mémoire de masse pour stocker les informations provenant de et/ou échangées avec l'interface de communication,
caractérisé en ce que les moyens d'entrée d'informations comprenant une entrée de type port USB.

Dans le cadre de la présente invention, par les termes « données » ou « informations » sont considérés comme totalement équivalents et désignent tout type de paramètres, fichiers, instructions, paramètres, codes, graphiques, courbes, tableaux, chiffres, nombres, lettres, mots ou autres, notamment des synergies de soudage, .... de contrôle, de réglage, de configuration, de sauvegarde, de mise à jour, d'archivage, de traçabilité, de maintenance, de prévention, d'exploitation ou autres... susceptibles d'être transmis à un poste de courant de soudage ou similaire, préalablement, pendant ou après son utilisation, ou à l'inverse extraits d'un poste de soudage pour être par exemple traités, analysés modifiés etc...

Selon le cas, le générateur de l'invention peut comprendre l'une ou plusieurs des caractéristiques suivantes :
- les moyens d'entrée d'informations sont reliés électriquement à l'interface de communication.
- l'interface de communication est reliée électriquement aux moyens à mémoire de masse.
- le port USB est adapté à la réception d'une clé de stockage d'informations de type clé USB de manière à permettre un transfert d'informations de la clé USB vers le port USB du générateur, ou inversement.

L'invention porte aussi sur un système de travail à l'arc comprenant un générateur de courant selon l'invention, comprenant un port de type USB et une clé de stockage de données de type USB, de préférence la clé USB est enfichée dans le port USB du générateur.

De préférence, la clé USB a une capacité de stockage de données d'au moins 128 Mo, de préférence encore d'au moins 1 Go.

L'invention concerne en outre un procédé de transfert unidirectionnel ou bidirectionnel de données d'une source de données vers un générateur de courant selon l'invention, ou inversement, caractérisé en ce que :
a) on utilise une clé de stockage de type USB en tant que source de données apte à stocker et/ou à émettre des données,
b) on enfiche ladite clé de type USB dans le port de type USB du générateur,
c) successivement à l'étape b), on procède au transfert des données depuis la clé de type USB vers le port de type USB, ou inversement.

L'invention a également trait à un procédé de soudage ou de coupage à l'arc mettant en oeuvre un générateur de courant ou un système selon l'invention, en particulier un procédé de soudage à l'arc TIG, MIG/MAG, plasma ou autre.

La solution de l'invention, bien que simple, conduit en outre à de nombreux avantages, à savoir :
- la possibilité d'utiliser une mémoire de stockage de masse de coût bas,
- ne présente pas de risque pour les matériels informatiques et ne nécessite d'ailleurs pas l'utilisation d'un ordinateur ou analogue,
- une simplicité de raccordement de type « plug and play », c'est-à-dire un fonctionnement direct dès raccordement,
- une disponibilité des composants électroniques dans le commerce,
- la possibilité d'utiliser des clés USB standards, et
- un confort accru et une simplicité d'utilisation pour l'utilisateur.

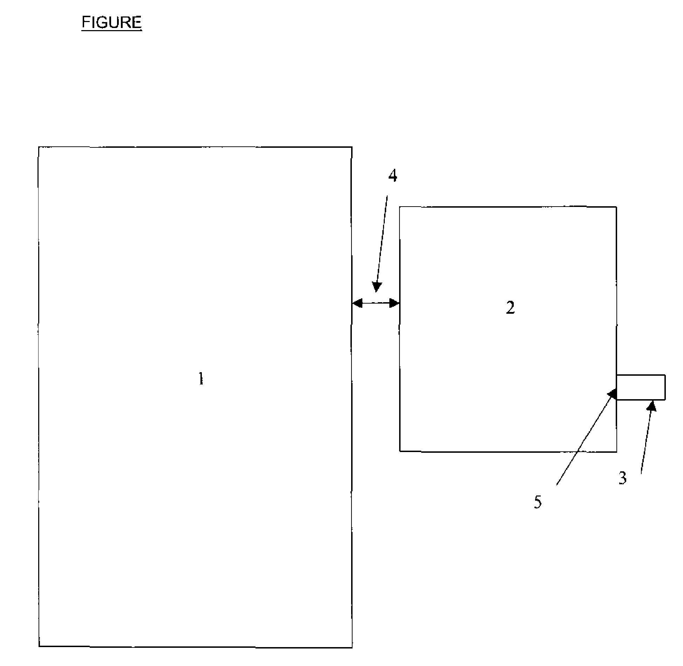

La figure ci-annexée montre un schéma de principe d'un générateur 1 de courant de soudage à l'arc selon l'invention, lequel comprend des moyens d'entrée d'informations permettant de fournir des informations au générateur, une interface 2 de communication pour permettre une récupération, un traitement, un échange et/ou un transfert desdites informations à des moyens à mémoire de masse, et des moyens à mémoire de masse pour stocker les informations provenant de et/ou échangées avec l'interface de communication.

Les moyens d'entrée d'informations sont reliés électriquement 4 à l'interface de communication 2.

Selon l'invention, les moyens d'entrée d'informations comprenant une entrée 5 de type port USB à laquelle vient se raccorder une clé USB 3 .

Le générateur est par exemple du type de celui commercialisé par la société Air Liquide Welding sous la dénomination DIGI@WAVE 400.

Les moyens d'entrée d'informations sont par exemple une interface homme-machine située sur la face avant du générateur de courant ou une liaison série avec un ordinateur.

L'interface 2 de communication est par exemple une carte électronique ou un module OEM.

Le port USB (Universal Serial Bus) sert de passerelle d'échange entre l'électronique embarquée du poste et une clé USB de stockage de données.

La clé USB est par exemple du type de celles vendues par la société Toshiba ou tout autre clé analogue normalisée.

L'invention permet notamment de réaliser un historique des modifications de programme ou des actions de maintenance du générateur de soudage, via une récupération des programmes et des données sur la clé USB car le générateur ne permet pas une gestion directe de ce type de fichiers ou de données.

## Revendications

1. Générateur de courant de travail à l'arc électrique, en particulier de soudage, comprenant :
- des moyens d'entrée d'informations permettant de fournir des informations au générateur,
- une interface de communication pour permettre une récupération, un traitement, un échange et/ou un transfert desdites informations à des moyens à mémoire de masse, et
- des moyens à mémoire de masse pour stocker les informations provenant de et/ou échangées avec l'interface de communication,
**caractérisé en ce que** les moyens d'entrée d'informations comprenant une entrée de type port USB.

2. Générateur selon la revendication 1, **caractérisé en ce que** les moyens d'entrée d'informations sont reliés électriquement à l'interface de communication.

3. Générateur selon la revendication 1 ou 2, **caractérisé en ce que** l'interface de communication est reliée électriquement aux moyens à mémoire de masse.

4. Générateur selon les revendications 1 à 3, **caractérisé en ce que** le port USB est adapté à la réception d'une clé de stockage d'informations de type clé USB de manière à permettre un transfert d'informations de la clé USB vers le port USB du générateur, ou inversement.

5. Système de travail à l'arc comprenant un générateur de courant selon l'une des revendications 1 à 4 comprenant un port de type USB et une clé de stockage de données de type USB, de préférence la clé USB est enfichée dans le port USB du générateur.

6. Système selon la revendication 5, **caractérisé en ce que** la clé USB a une capacité de stockage de données d'au moins 128 Mo, de préférence d'au moins 1 Go.

7. Procédé de transfert unidirectionnel ou bidirectionnel de données d'une source de données vers un générateur de courant selon l'une des revendications 1 à 4, ou inversement, **caractérisé en ce que** :
d) on utilise une clé de stockage de type USB en tant que source de données apte à stocker et/ou à émettre des données,
e) on enfiche ladite clé de type USB dans le port de type USB du générateur,
f) successivement à l'étape b), on procède au transfert des données depuis la clé de type USB vers le port de type USB, ou inversement.

8. Procédé de transfert selon la revendication 7, **caractérisé en ce qu'**on utilise une clé USB ayant une capacité de stockage de données d'au moins 128 Mo, de préférence d'au moins 1 Go.

9. Procédé de soudage à l'arc mettant en oeuvre un générateur de courant selon l'une des revendications 1 à 4 ou un système selon l'une des revendications 5 ou 6.

10. Procédé de coupage à l'arc plasma mettant en oeuvre un générateur de courant selon l'une des revendications 1 à 4 ou un système selon l'une des revendications 5 ou 6.
